# EUROPÄISCHE PATENTSCHRIFT

(11) **EP 0 471 363 B1**
(45) Veröffentlichungstag und Bekanntmachung des Hinweises auf die Patenterteilung: **13.03.1996**
(21) Anmeldenummer: 91113660.4
(22) Anmeldetag: 14.08.1991
(51) Int. Cl.: B09B 3/00, E04H 5/00, B08B 15/04

(54) **Einrichtung und Verfahren zur Beseitigung gesundheitsgefährdender Gase, Dämpfe, Stäube und Rauche durch Adsorption an oberflächenaktiven Substanzen**
Apparatus and method for the disposal of health-endangering gases, vapours, dusts and fumes by adsorption to surfactant substances
Dispositif et procédé pour l'élimination des gaz, vapeurs, poussières et fumées dangereux pour la santé par adsoption à des substances tensio-actives

(30) Priorität: 17.08.1990 DE 4026158; 04.01.1991 DE 4100144
(43) Veröffentlichungstag der Anmeldung: 19.02.1992
(73) Patentinhaber: LEONHARD WEISS GmbH & Co., D-74564 Crailsheim (DE)
(72) Erfinder: Petersen, Volker, W-7180 Crailsheim (DE); Vogel, Heinrich, W-7262 Althengstett (DE); Schmidt, Werner, W-7180 Crailsheim (DE); Schmidt, Fritz Joachim, W-7320 Göppingen (DE); Neumayr, Volker, Dr., W-7180 Crailsheim (DE); Rapp, Walter, Dr., W-7320 Göppingen (DE)
(74) Vertreter: Pfusch, Volker, Dipl.-Ing.

(56) Entgegenhaltungen:
- EP-A- 0 192 285
- WO-A-87/01312
- WO-A-89/09664
- DE-A- 3 225 953
- DE-A- 3 710 283
- DE-A- 3 734 271
- DE-A- 3 734 273
- DE-A- 3 736 973
- DE-C- 159 260
- GB-A- 2 096 209
- US-A- 3 470 811
- US-A- 4 287 405
- US-A- 4 643 111
- US-A- 4 684 381
- US-A- 4 838 733
- US-A- 4 839 061
- US-A- 4 842 448
- 'HANDBOEK BODEMSANERINGSTECHNIEKEN' Juli 1983 , STAATSUITGEVERIJ NEDERLAND , 'S-GRAVENHAGE, Seite 4, Zeile 41 - Seite 16, Zeile 3
- REVUE GENERALE DE L'ELECTRICITE Nr. 8, September 1987, PARIS FR Seiten 71 - 77
- FAISANTIEU ET AL: 'LA DECONTAMINATION DES SITES ET DES LOCAUX', Seite 76, linke Spalte, Zeile 38 - Zeile 54

## Beschreibung

Werden Erdarbeiten in kontaminierten Böden durchgeführt, so können gesundheitsgefährdende Gase, Dämpfe und Stäube austreten und in die Atmosphäre geraten. Nicht nur diese selbst sind gesundheitsgefährdend, sondern es können auch durch Überführung einzelner Sauerstoffatome in Sauerstoffmoleküle die giftigen Ozonmoleküle entstehen. Diese Gefahr besteht sowohl an den Baustellen selbst wie auch beim Transport von entnommenem Erdreich, ferner bei Haufwerk, das bei den Erdarbeiten aufgeschüttet wurde.

Aus der US-A-4 643 111 ist eine Einrichtung zur Beseitigung gesundheitsgefährdender Gase, Dämpfe und Stäube bei Erdarbeiten in kontaminierten Böden bekannt, die eine durchgehende Umfassungswand und ein geschlossenes Dach zur Abdeckung von kontaminiertem Erdreich aufweist.

Durch die vorliegende Erfindung soll durch verschiedene Maßnahmen das Austreten von Gasen und Stäuben in die Atmosphäre verhindert werden.

Diese Aufgabe wird durch die Erfindung auf verschiedene Weisen mit einer Einrichtung gemäß Anspruch 1 bzw. einem Verfahren gemäß Anspruch 4 gelöst. (In den folgenden Ausführungen werden auch die in den Ansprüchen definierten Begriffe verwendet.)

Nach einem Ausführungsbeispiel werden die Erdarbeiten innerhalb einer Halle durchgeführt, die eine Schleuse besitzt, wobei Halle und Schleuse eine derartige Größe haben, daß die benötigten Erdbaugeräte und Transportfahrzeuge von ihnen aufgenommen werden können. Die Innenräume der Halle und der Schleuse werden mit einem Absauggerät verbunden, das die Luft erst nach Durchlaufen eines Abluftreinigers ins Freie fördert.

Die in der Halle arbeitenden Personen können sich in bekannter Weise durch Atemschutzgeräte, zwangsbelüftete Kabinen und ähnliches selbst schützen. Durch die Erfindung wird unabhängig davon dafür gesorgt, daß Gase und Stäube nicht in die Atmosphäre geraten.

Nach einem weiteren Ausführungsbeispiel können die Erdarbeiten von außerhalb durchgeführt werden. Die Dachelemente des die die Baustelle überdeckenden Daches können nacheinander abgehoben werden, um Arbeiten mit Erdbaugeräten von außen zu ermöglichen, und dann wieder aufgelegt werden.

Der Abluftreiniger kann einen austauschbaren Aktivkohlebehälter aufweisen.

Bei Schweißarbeiten an Schienen für Eisen- oder Straßenbahn entstehen außerordentlich gesundheitsschädliche Rauche. Nach dem von Th. Goldschmidt erfundenen Thermit-Verfahren, nach welchem schwer reduzierbare Metalloxide, z. B. Eisen-, Chrom-, Antimon-Oxide, mit Hilfe von Aluminiumpulver oder -granulat zum entsprechenden Metall reduziert werden, entstehen bei dieser thermischen Reaktion aus den angewandten Metallen und Metalloxiden, dem Flußmittel usw. die erwähnten gesundheitsschädlichen Rauche. Entsprechendes gilt für das Lichtbogenschweißen an und auf Schienen.

Diese Rauche können beseitigt und unschädlich gemacht werden. Hierzu wird für den Arbeitsplatz eine Überdachung vorgesehen und die Überdachung, wie z.B. die Halle nach Anspruch 1, mit einem Absauggerät und einem Abluftreiniger verbunden, wobei der Abluftreiniger einen austauschbaren Behälter für ein Adsorbens hat.

Der Ausdruck "Überdachung" soll sehr allgemein jedes mehr oder weniger stabile Gebilde bezeichnen, das geeignet ist, einen Arbeitsplatz zumindest soweit zu umgeben, daß die Rauche darin gefangen werden.

Als Adsorbens können nach Anspruch 3 vorzugsweise synthetische Harze dienen, insbesondere Tenax oder Chelex 100. Es lassen sich auch künstliche tonmineralähnliche Stoffe als Adsorbens verwenden.

Ausführungsbeispiele mit weiteren Merkmalen der Erfindung werden im folgenden anhand der Zeichnungen beschrieben.
- Figur 1: zeigt schematisch, in lotrechtem Schnitt eine Halle, in der ein Raupenbagger arbeitet und eine an der Halle vorgesehene Schleuse.
- Figur 2: zeigt schematisch, in Seitenansicht ein Absauggerät mit Abluftreiniger.
- Figur 3 und 4: zeigen schematisch in Seitenansicht und Draufsicht eine selbsttragende Abdeckung für einen Arbeitsbereich, ein Absauggerät mit Abluftreiniger und ein Erdbaugerät.

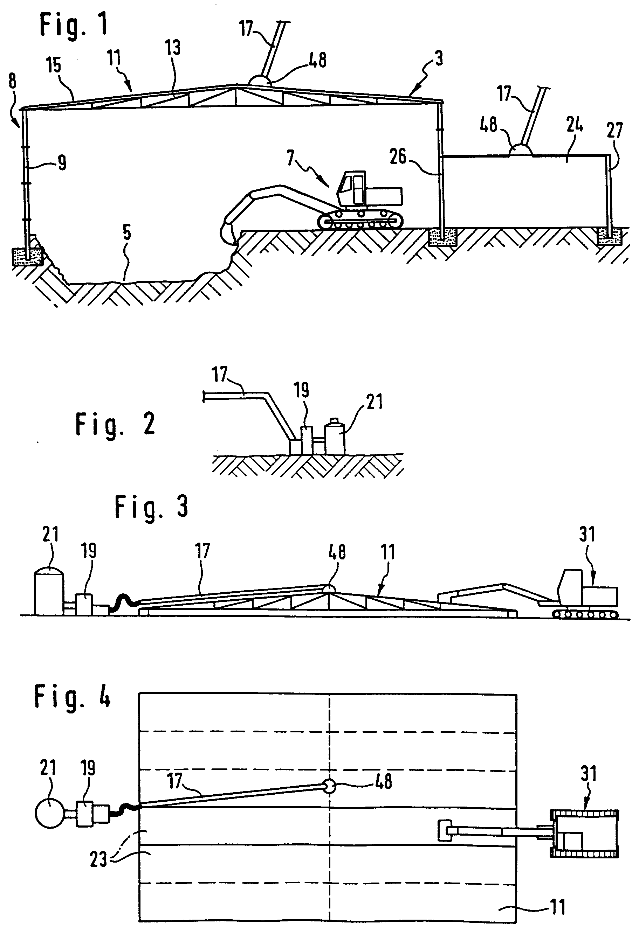

Figur 1 zeigt eine als Ganzes mit 3 bezeichnete Halle, die über einem kontaminierten Stück Gelände errichtet wird, in dem eine Baugrube 5 von einem Raupenbagger 7 ausgehoben werden soll. Die Wände 8 der Halle sind aus Elementen 9 an sich bekannter Art zusammengesetzt. Die Elemente haben Rahmen, die mit durchsichtigen Folien oder Kunststoffplatten wie Plexiglas ausgefüllt sein können. Die Halle hat ein Dach 11, das nebeneinander eine Reihe von Trägern 13 in Fachwerkkonstruktion aufweist. Die Träger sind von einer Folie oder einzelnen Folienbahnen überspannt. Die Halle ist so groß, daß sie neben der Baugrube auch ein Erdbaugerät, wie hier den Raupenbagger oder mehrere Erdbaugeräte aufnehmen kann sowie außerdem Lastwagen zum Abbefördern des Aushubes. Die einzelnen Elemente 9 sind gegenüber dem Boden, gegeneinander und gegenüber der Folie 15 des Daches abgedichtet. Am Dach setzt an einem Anschlußstutzen 48 ein Rohr 17 an, das - wie Figur 2 zeigt - zu einem Absauggerät 19 führt, das ortsfest außerhalb der Halle angeordnet ist. Das Absauggerät drückt die abgesaugte Luft durch einen Abluftreiniger 21 (Figur 2) ins Freie.

Das Absauggerät 19 besitzt einen Seitenkanalverdichter oder Ventilator. Der Abluftreiniger enthält zur Adsorption an oberflächenaktiven Substanzen einen austauschbaren Aktivkohlebehälter.

In die Halle müssen Lastwagen einfahren können, die ausgehobenes Erdreich abtransportieren. Zu diesem Zweck ist an der Halle eine Schleuse 24 angebracht, die über ein inneres Tor 26 mit dem Innenraum der Halle und über ein äußeres Tor 27 mit der Umgebung in Verbindung steht. Die Schleuse ist über einen Anschlußstutzen 48 und ein Rohr 17 ebenfalls mit dem Absauggerät 19 verbunden.

Die Figuren 3 und 4 zeigen eine sehr flache Abdeckung eines Bodenbereiches. Hierzu dient ein Dach 11, wie es schon anhand der Figur 1 beschrieben wurde. In Figur 7 ist das Dach in Draufsicht gezeigt. Wiederum führt ein Rohr 17 zu einem Absauggerät 19 und einem Abluftreiniger 21, die ortsfest angeordnet sind. Erdbaugeräte, hier ein Raupenbagger 31, können den Boden bearbeiten, nachdem jeweils ein Dachelement 23 vorübergehend entfernt wurde.

## Patentansprüche

1. Einrichtung zur Beseitigung gesundheitsgefährdender Gase, Dämpfe und Stäube bei Erdarbeiten in kontaminierten Böden durch Adsorption an oberflächenaktiven Substanzen,
a) mit einer ein, von Erdbaugeräten zu bearbeitendes oder bearbeitetes kontaminierten Boden aufweisendes, Bodengebiet einschließenden Überdachung in Form einer Halle,
b) wobei von der Halle ein Schlauch oder Rohr (17) zu einem Absauggerät (19) führt, das, zur Adsorption der Schadstoffe an den oberflächenaktiven Substanzen, die in der Halle befindliche Raumluft durch einen Abluftreiniger (21) ins Freie fördert,
**gekennzeichnet** durch folgende Merkmale:
c) die Überdachung besteht aus einem ***Dach*** (11) aus zusammengesetzten und gegeneinander und gegenüber dem Boden abgedichteten Dachelementen (23),
d) der Schlauch oder das Rohr (17) setzen am Dach an, und
e) die Dachelemente sind einzeln abhebbar angebracht.

2. Einrichtung nach Anspruch 1, dadurch **gekennzeichnet**, daß das Dach (11) Dachträger (13) und einzelne Dachelemente (23) mit Kunststoff-Folien (15) oder Plexiglasplatten aufweist.

3. Einrichtung nach Anspruch 1, dadurch **gekennzeichnet**, daß als oberflächenaktive Substanzen Aktivkohle, künstliche tonmineralähnliche Stoffe oder synthetische Harze dienen, insbesondere Tenax oder Chelex 100.

4. Verfahren zur Beseitigung gesundheitsgefährdender Gase, Dämpfe und Stäube bei Erdarbeiten in kontaminierten Böden durch Adsorption an oberflächenaktiven Substanzen, unter Verwendung einer Einrichtung nach Anspruch 1, 2 oder 3, wobei
a) das von Erdbaugeräten zu bearbeitende Bodengebiet von einem Dach (11) überwölbt wird und
b) ein Schlauch oder Rohr (17) nach außen zu dem Absauggerät (19) geführt wird, das die Luft zur Adsorption der Schadstoffe durch den Abluftreiniger (21), der die oberflächenaktiven Substanzen enthält, ins Freie fördert,
dadurch **gekennzeichnet**, daß
c) der Schlauch oder das Rohr am Dach angesetzt werden und
d) einzelne Dachelemente (23) abgehoben werden, um von außen betriebenen Erdbaugeräten Zugang zu dem Bodengebiet zu verschaffen.

## Claims

1. Arrangement for eliminating noxious gases, vapours and dust from earthworks in contaminated ground by adsorption on surface-active substances,
a) with a canopy in the form of a shed enclosing an area of ground which is to be worked by earth-moving machinery or comprises contaminated worked ground,
b) wherein a tube or pipe (17) leads from the shed to an aspirator (19) which, for adsorption of the pollutants on the surface-active substances, conveys the air located in the shed through an outgoing air purifier (21) into the open,
characterized by the following features:
c) the canopy consists of a roof (11) composed of assembled roof elements (23) which are sealed from one another and from the ground,
d) the tube or the pipe (17) are applied to the roof,
e) the roof elements are arranged so as to be individually removable.

2. Arrangement according to Claim 1, characterized in that the roof (11) comprises roof girders (13) and individual roof elements (23) with plastic sheets or Plexiglas panels.

3. Arrangement according to Claim 1, characterized in that activated carbon, artificial clay-mineral like substances or synthetic resins, in particular Tenax or Chelex 100 are used as surface-active substances.

4. Method of eliminating noxious gases, vapours and dust from earthworks in contaminated ground by adsorption on surface-active substances, using an arrangement according to Claim 1, 2 or 3, wherein
a) the area of ground to be worked by earth-moving machinery is covered by a roof (11) and
b) a tube or pipe (17) is guided outwardly to the aspirator (19) which conveys the air into the open for adsorption of the pollutants by the outgoing air purifier (21) containing the surface-active substances,
characterized in that
c) the tube or the pipe is applied to the roof and
d) individual roof elements (23) are removed to give earth-moving machinery which is operated from outside access to the area of ground.

## Revendications

1. Dispositif pour l'élimination des gaz, vapeurs et poussières dangereux pour la santé lors des travaux de terrassement dans les sols pollués, par adsorption sur des substances tensioactives,
a) comportant une couverture formée d'un hall qui enferme une zone de sol présentant du sol contaminé à travailler ou travaillé par des engins de terrassement,
b) un tuyau souple ou un tuyau rigide (17) allant de ce hall à un appareil d'aspiration (19) qui, pour l'adsorption des matières nocives sur les substances tensioactives, refoule l'air se trouvant dans le hall au dehors par un épurateur d'air vicié (21),
caractérisé par les caractéristiques suivantes :
c) la couverture est constituée d'un toit (11) formé d'éléments (23) assemblés et joints de façon étanche les uns aux autres et au sol,
d) le tuyau souple ou le tuyau rigide (17) est monté sur ce toit, et
e) les éléments du toit sont montés de façon à pouvoir être enlevés individuellement.

2. Dispositif selon la revendication 1, caractérisé par le fait que le toit (11) présente des poutres (13) et des éléments individuels (23) comportant des feuilles de plastique (15) ou des plaques de plexiglas.

3. Dispositif selon la revendication 1, caractérisé par le fait qu'il est utilisé comme substances tensioactives du charbon actif, des matières artificielles semblables à des minéraux argileux ou des résines synthétiques, en particulier Tenax ou Chelex 100.

4. Procédé d'élimination des gaz, vapeurs et poussières dangereux pour la santé lors des travaux de terrassement dans les sols pollués, par adsorption sur des substances tensioactives, au moyen d'un dispositif selon l'une des revendications 1, 2 et 3, dans lequel
a) la zone de sol à travailler par des engins de terrassement est couverte par un toit (11) et
b) un tuyau souple ou un tuyau rigide (17) va à l'extérieur à un appareil d'aspiration (19) qui refoule l'air au dehors pour l' adsorption des matières nocives par l'épurateur d'air vicié (21), qui contient les substances tensioactives,
caractérisé par le fait que
c) le tuyau souple ou le tuyau rigide est monté sur le toit et
d) des éléments de toit (23) sont enlevés pour donner accès à la zone de sol à des engins de terrassement fonctionnant de l'extérieur.
